# EUROPEAN PATENT APPLICATION

(11) **EP 4 174 802 A1**
(43) Date of publication of application: **03.05.2023**
(21) Application number: 21205217.9
(22) Date of filing: 28.10.2021
(51) Int. Cl.: G06V 30/422

(54) **LOCALIZATION OF A CONSTRUCTION ELEMENT INSIDE A WALL**

(71) Applicant: Siemens Aktiengesellschaft, 80333 München (DE)
(72) Inventor: Amon, Peter, 81675 München (DE); Khalil, Mohamed, 81379 München (DE); Mayer, Hermann Georg, 83209 Prien am Chiemsee (DE); Munding, Volker, 81739 München (DE); Newman, Joseph, 82008 Unterhaching (DE); Papadopoulos, Theodoros, 80333 München (DE); Riegel, Thomas, 85662 Hohenbrunn (DE); Wehrstedt, Jan Christoph, 81829 München (DE)
(74) Representative: Siemens Patent Attorneys

(57) **Abstract**

The invention provides a method for localizing a construction element inside a wall, comprising the steps:
- receiving images of a wall to be examined,
- detecting a position and a type of at least one component located on the wall by means of the images, wherein the component relates to a construction element inside the wall,
- outputting the position on the wall and the type of the component,
- reading in a trained machine-learning model, wherein the machine-learning model was trained to represent a positional information of a construction element depending on positional data and types of components on the wall and to output a likelihood value of a presence of a construction element inside an area of a wall,
- generating likelihood values of a presence of a construction element inside each area of the wall by applying the trained machine-learning model to the position and the type of the component,
and
- outputting the likelihood values for each area of the wall.

The invention enables for example visualizing potential locations of construction elements as a heatmap overlayed on the viewed wall.

## Description

The present invention relates to a computer-implemented method and an apparatus for localizing a construction element inside a wall, as well as a computer-implemented method for providing a trained machine-learning model for use in said method or by said apparatus, and a computer program product.

Construction elements such as wires, pipes, or reinforcement structures inside walls or floors are typically planned during the construction phase of a building project. The respective plans were often archived after the project is finished, leaving no information about the arrangement of these construction elements in the walls, ceilings, and floors. However, such information becomes essential for repairs or renovations. For example, drilling a hole into a wall without any information about construction elements inside the wall can be problematic.

The layouts/plans of wiring, piping and reinforcement typically follow international and region-specific guidelines/standards or design codes, i.e., the layouts/plans can be used to determine positions of construction elements. However, for example for older buildings such standards often do not apply and/or plans were not updated. Alternatively, object detectors can be used to detect for example metals, wood, copper wires, and PVC pipes. Such object detectors rely on interpreting response signals of internal electro-magnetic transducers when reflected by the detected object to identify its type (pipe, wire, etc.). The visualization of the hidden construction elements behind the walls is available in many residential applications, provided a BIM model (BIM: building information modeling) or a wiring/piping/reinforcement layout is available. However, due to construction works or plan changes a BIM model can be incorrect or not up to date.

It is therefore an objective of the present invention to improve detection and/or visualization of construction elements inside a wall.

The objective is solved by the features of the independent claims. The dependent claims contain further developments of the invention.

The invention provides according to the first aspect a computer-implemented method for localizing a construction element inside a wall, the method comprising the steps:
- receiving images of a wall to be examined,
- detecting a position and a type of at least one component located on the wall by means of the images, wherein the component relates to a construction element inside the wall,
- outputting the position on the wall and the type of the component,
- reading in a trained machine-learning model, wherein the machine-learning model was trained to represent a positional information of a construction element depending on positional data and types of components on the wall and to output a likelihood value of a presence of a construction element inside an area of a wall,
- generating likelihood values of a presence of a construction element inside each area of the wall by applying the trained machine-learning model to the position and the type of the component,
   and
- outputting the likelihood values for each area of the wall.

Unless indicated otherwise in the description below, the terms "perform", "calculate", "computer-aided", "compute", "discover", "generate", "configure", "reconstruct" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, processors, and other electronic devices for data processing.

Within the context of embodiments of the invention, a processor can be understood to mean for example a machine or an electronic circuit. A processor can be in particular a central processing unit (CPU), a microprocessor or a microcontroller, for example an application-specific integrated circuit or a digital signal processor, possibly in combination with a memory unit for storing program instructions, etc. A processor can, by way of example, also be an IC (integrated circuit), in particular an FPGA (field programmable gate array) or an ASIC (application-specific integrated circuit), or a DSP (digital signal processor) or a graphics processor GPU (graphics processing unit). A processor can also be understood to mean a virtualized processor, a virtual machine or a soft CPU. It can, by way of example, also be a programmable processor that is equipped with configuration steps for carrying out the method according to embodiments of the invention or that is configured by means of configuration steps such that the programmable processor realizes the features according to embodiments of the invention for the method, the component, the modules or other aspects and/or sub-aspects of embodiments of the invention.

Within the context of embodiments of the invention, a "module" can be understood to mean for example a processor and/or a memory unit for storing program instructions. By way of example, the processor is configured specifically to execute the program instructions such that the processor performs functions to implement or perform the method according to embodiments of the invention or a step of the method according to embodiments of the invention.

Within the context of embodiments of the invention, "assign", in particular in regard to data and/or information, can be understood to mean for example computer-aided assignment of data and/or information.

Within the context of embodiments of the invention, "provide", in particular in regard to data and/or information, can be understood to mean for example computer-aided provision. Provision is effected for example via an interface (e.g. a database interface, a network interface, an interface to a memory unit). This interface can be used for example to convey and/or send and/or retrieve and/or receive applicable data and/or information during the provision.

Within the context of embodiments of the invention, "a wall" can be understood to mean for example also a floor or ceiling. In particular, a wall can mean at least part of a room of a building. An area or section of a wall can be a for example defined depending on the size or geometry of the wall. Alternatively, an area of a wall can be defined depending on components detected on the wall, i.e., defined sections of the wall around a detected component. In particular, using wall sections/areas the wall can be divided into segments for which an information (e.g., a likelihood value) can be provided.

Within the context of embodiments of the invention, "an image" (of a wall) can be understood to mean a photo or a video taken with a camera. In particular, an image can be a live image of the wall, wherein the live image can comprise a plurality of individual exposures assembling one live view of the wall.

Within the context of embodiments of the invention, "a construction element" can be for example a wire, a pipe or a reinforcement structure (e.g., steel girders). A construction element can for example be hidden inside a wall, wherein a component related to said construction element can be detectable on the wall. For example, a power outlet can be visible on the wall indicating wiring inside the wall in the vicinity of the power outlet.

It is an advantage of the invention to allow localization of hidden construction elements inside a wall without the need of a precise layout/plan of the construction elements and/or without test drilling. Therefore, the method is particularly suited for older buildings. The potential location of a hidden construction element is determined based on the visible components on the wall by means of a trained machine-learning model. Furthermore, the method is independent of a depth of the construction element inside the wall, which can be a limiting factor of object detectors.

According to a preferred embodiment of the method, the components related to construction elements inside the wall may be detected by means of an image classification model.

The image classification model/algorithm is preferably trained to detect components related to construction elements in images. For example, the image classification model was trained using a plurality of images of walls comprising a variety of components. Therefore, the detection of a component in an image can be performed automatically.

According to another preferred embodiment of the method a heatmap may be generated based on the likelihood values.

The generated likelihood values of different wall areas can be assembled to generate a heatmap. Different colours of the heatmap can indicate the likelihood of having a construction element at a given position. In particular, dividing the wall into sections/areas a grid for the heatmap can be defined.

According to another preferred embodiment of the method the heatmap may be visualized as an overlay image on the wall.

For example, the heatmap can be displayed using an augmented reality device. Preferably, a live image of the wall can be overlayed with the heatmap.

According to another embodiment of the method, a component may be a port, a faucet, a power outlet, an installed electrical device (e.g., a lamp), or a switch.

Preferably, the components are visible/detectable on the wall and indicative for a construction element. In other words, the components of interest are preferably related to a construction element. To this end, component types, e.g., electric components or sanitation/plumbing components, can be predefined.

According to another preferred embodiment of the method, a computer-aided three-dimensional representation of the wall comprising the position and type of the component may be generated and the three-dimensional representation of the wall is used as input for the trained machine-learning model.

Preferably, a computer-aided three-dimensional (3D) representation or model of the wall or a room can be reconstructed using several images of the wall. To this end, the wall or the room is preferably scanned using a sensor/camera providing multiple images of the wall from different angles and/or viewing different sections of the wall. The three-dimensional representation of the image data allows an improved localization of construction elements. According to an advantageous embodiment of the method, the machine-learning model could be trained depending on at least a standard specification as a boundary condition, the standard specification specifies a standardized position of a construction element inside said wall.

A standard specification of wiring, piping or reinforcement allows refinement of the machine-learning model to achieve a higher localization accuracy.

According to another embodiment of the method, the machine-learning model could be trained depending on position measurements of a construction element inside the wall to be examined.

In particular, the machine-learning model can be iteratively refined using actual position measurements of a construction element inside the wall. Furthermore, the machine-learning model can hence be particularly trained and improved for a specific wall, room or building (e.g., with similar rooms).

According to another embodiment of the method, a probability value may be checked against a measured position of a construction element inside the wall and a check result is output.

The check provides information about the accuracy of the machine-learning model and further allows to refine it. Furthermore, a layout and/or a BIM model can be updated accordingly.

The invention provides according to the second aspect an apparatus for localizing a construction element inside a wall, the apparatus comprising:
- a first interface configured to receive images of a wall to be examined,
- a detection module configured
   - to detect a position and a type of at least one component located on the wall by means of the images, wherein the component relates to a construction element inside the wall,
   - and to output the position on the wall and the type of the component,
- a second interface configured to read in a trained machine-learning model, wherein the machine-learning model was trained to represent a positional information of a construction element depending on positional data and types of components on the wall and to output a likelihood value of a presence of a construction element inside an area of a wall,
- a generator configured to generate likelihood values for each wall area of the wall by applying the trained machine-learning model to the position and the type of the component, and
- an output module configured to output the likelihood values for each wall element of the wall.

According to an embodiment the apparatus may further comprise at least one camera configured to provide images of the wall to be examined.

According to another embodiment the apparatus may further comprise a visualization module configured to visualize a heatmap based on the likelihood values.

The invention provides according to another aspect a computer-implemented method for providing a trained machine-learning model for use in the method or by the apparatus as described above, the method comprising:
- reading in an untrained machine-learning model,
- reading in training data, wherein the training data comprise positional data and types of a variety of components on multiple walls and positional information about construction elements inside these walls, wherein the components are related to the construction elements,
- training the machine-learning model by means of the training data, wherein the machine-learning model is configured to represent the positional information of the construction elements depending on the positional data and types of the related components and to output a likelihood value of a presence of a construction element inside an area of a wall,
   and
- providing the trained machine-learning model.

In addition, a computer program product (non-transitory computer readable storage medium having instructions, which when executed by a processor, perform actions) having program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
- Fig. 1:: shows an exemplary embodiment of the method for localizing a construction element inside a wall;
- Fig. 2:: shows an exemplary embodiment of the apparatus for localizing a construction element inside a wall; and
- Fig. 3:: shows an exemplary embodiment of the method for providing a trained machine-learning model for use in the method for localizing a construction element inside a wall.

Equivalent parts in the different figures are labeled with the same reference signs.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components). Alternatively, and/or additionally, a person skilled in the art, within the scope of his/her expert ability, can choose to the greatest possible extent arbitrary combinations according to embodiments of the invention of hardware (components) and software (components) in order to implement realization variants according to embodiments of the invention.

In particular, in view of the high number of different realization options, it is impossible and also not helpful or necessary for the understanding of embodiments of the invention to name all these realization options. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can preferably also serve as features for another exemplary embodiment, in particular without this having to be explicitly stated in the respective exemplary embodiment.

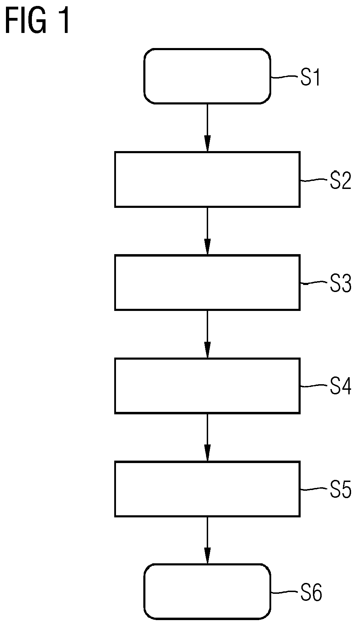

Figure 1 shows an exemplary embodiment of the invention. It shows a flow chart of the computer-implemented method for localizing a construction element inside a wall.

The construction element can for example be a wire, a pipe or a reinforcement structure hidden inside the wall. The wall can be for example a wall of a room in a building, a ceiling, or a floor. For example, before drilling a hole into the wall, the wall can be examined using this method to localize any hidden construction elements.

In the first step S1 at least one image of the wall to be examined is received from a camera. For example, the wall is scanned using the camera providing images of the wall from different angles.

In the next step S2 a position and type of at least one component located on the wall is detected by means of the at least one image. For example, an image classification model is used to detect the component and to determine its position in the image and the component's type. A component's type can for example be a port, a faucet, a power outlet, an installed electrical device (e.g., a lamp), or a switch. The component relates to a construction element inside the wall, e.g., a power outlet can indicate wiring, or a faucet can indicate a pipe.

The image classification model is preferably trained to detect such predefined components in images of a wall. For example, the image classification model is trained by means of training data comprising a plurality of labelled images of walls comprising components, wherein the position and the type of these components are labelled.

In the next step S3 the positions and the types of all detected components are provided. The position is preferably given in a coordinate system defined by the respective images. It is possible to combine at least two images of components, i.e., to generate a 2D representation of the wall or (part of the) room. For example, if one image covers a lamp on a ceiling and another a corresponding switch on a nearby wall, the combined images can be used to identify connecting cables. Alternatively, the images can be used to generate a 3D representation of the wall or (part of the) room and the position of the detected components are provided in a respective coordinate system assigned to the 3D representation.

In the next step S4 a trained machine-learning model is read in, wherein the machine-learning model was trained to represent a positional information of a construction element depending on positional data and types of components on the wall and to output a likelihood value of a presence of a construction element inside an area of a wall. Hence, the machine-learning model provides a likelihood value of a presence of a construction element for a given section of the wall or for a position on the wall. The machine-learning model therefore provides a probability of having a construction element hidden in a specified area of the wall.

The trained machine-learning model can for example be an artificial neural network. Preferably the machine-learning model was trained depending on at least a standard specification as a boundary condition, wherein the standard specification specifies a standardized position of a construction element inside said wall. In addition, or alternatively, measurements of a position of a construction element inside the wall to be examined, e.g., from a test drilling, can be used as a boundary condition for training the machine-learning model.

In the next step S5 likelihood values of a presence of a construction element inside each defined section of the wall are generated by applying the trained machine-learning model to the position and the type of the component. Preferably for each predefined wall area/section one likelihood value is output. In other words, a likelihood value for the presence of a construction element inside the wall are determined for a given location. For example, the wall can be divided into multiple sections forming a grid. Then, for each grid point, a likelihood value of a presence of a construction element inside the wall is generated.

In the next step S6 the generated likelihood values for each wall sections are output. Preferably, a heatmap is generated based on the likelihood values. The heatmap can for example be displayed as an overlay image on the image or a live view of the wall. In that way it can be visualized where a construction element is most likely located inside the wall.

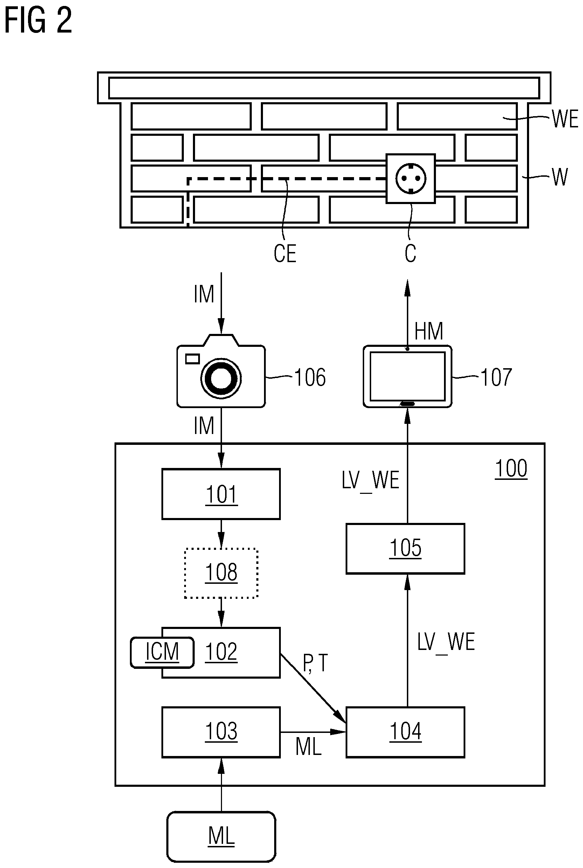

Figure 2 shows an exemplary embodiment of the apparatus 100 for localizing a construction element CE inside a wall W.

The apparatus 100 comprises a first interface 101, a detection module 102, a second interface 103, a generator 104 and an output module 105. Furthermore, the apparatus 100 can comprise or can be coupled to a camera 106 and/or a visualization module 107. A visualization module 107 can for example be (a part of) an augmented reality (AR) device, e.g., AR goggles, a tablet, or a smartphone. In particular, the visualization module 107 can comprise the camera 106. The apparatus 100 can for example be implemented in the cloud. Alternatively, the apparatus can be part of an augmented reality device.

The first interface 101 is configured to receive images IM of a room with at least one wall W. The wall has for example a component C, e.g., a power socket. Furthermore, the wall comprises wiring CE, wherein the power socket can indicate the possible location of the wiring CE. The wall can be divided into several wall areas or sections WE. The images IM of the wall can for example be a live view of the wall using AR goggles. The images IM are sent to the detection module 102.

The detection module 102 is configured to detect a position P and a type T of a component C located on the wall by means of the images by means of an image classification model/algorithm ICM and to output the position/location of the component C on the wall and the type of the component C. For example, the detection module can output the coordinates/position of the power socket with respect to for example the wall edges or in a predefined coordinate system and the component type "power socket".

To this end, the apparatus 100 can further comprise a second generator 108, configured to generate a computer-aided three-dimensional representation of the wall comprising the position and type of the component. The three-dimensional representation of the wall can then be used as input for the trained machine-learning model.

For example, the AR goggles can be equipped with a small camera used to scan the room. The AR goggles can capture multiple images from different perspectives of the room to create a 3D virtual reconstruction of the room. After a 3D virtual room is reconstructed, the interior of the room is detected using the image classification algorithm, especially components like power sockets, house appliances, lighting, water outlets, windows, and/or doors. The purpose of this step is the identification of the spots of the wall around which hidden construction elements are probable. The respective types of the component help to determine the type of a construction element and preferably also the location of the construction element, e.g., a power socket may indicate wiring, wherein the location may follow specific rules/standards.

The second interface 103 is configured to read in a trained machine-learning model ML, wherein the machine-learning model ML was trained to represent a positional information of a construction element depending on positional data and type information of components on the wall and to output a likelihood value of a presence of a construction element inside an area of a wall.

The generator 104 is configured to generate likelihood values LV_WE for each wall area WE of the wall by applying the trained machine-learning model ML to the position and the type of the component. The output module 105 is configured to output the likelihood values for each wall area WE of the wall. Preferably, the wall areas/sections are defined in a grid pattern, such that the likelihood values can be displayed as a heatmap HM using the grid pattern. For example, the heatmap HM can be shown to a user of the AR googles as an overlay image when viewing the wall W. The likelihood values are displayed using different colours creating the heatmap HM. The different colours represent then the regions where construction elements may exist (e.g., in red), and regions where drilling is likely to be safe (e.g., in green). The AR device enables the display of heatmaps of different construction elements CE separately or visualizes a comprehensive overview of all construction elements combined. As an alternative to AR goggles, the AR overlay can be shown on a 2D device such as a tablet or a smartphone.

In other words, the trained model ML, e.g., an artificial neural network, is therefore used to infer the likelihood of having a critical construction element at the different regions in the room. The 3D representations and the positions and types of the detected components are given as inputs to the trained model ML, and the output of the model ML is the probability of whether a given construction element may be hidden at a given location of the wall.

The machine-learning model ML can be trained using for example two sets of data: a multitude of layout wiring and/or piping plans from different residential, industrial, and office buildings and preferably the adopted norms and design specifications followed by engineers to design these layouts as boundary conditions. Both aspects ensure a more precise probability estimate for the presence of a critical construction element.

The accuracy of the machine-learning model can further be refined using direct measurements of the position of a construction element CE. Such measurement data can also be incorporated to refine the probability heatmap HM. As a further refinement of the trained model ML, partial information about wiring, pipes, etc. for the specific local circumstance can be used to improve the results.

Furthermore, the output of the generator 104 can be compared to existing wiring layouts and/or a BIM model to detect deviations.

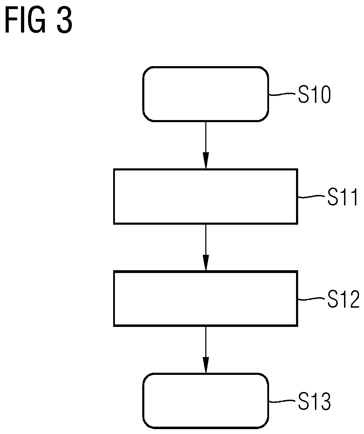

Figure 3 shows an exemplary embodiment of the computer-implemented method for providing a trained machine-learning model for use in the method of or by the apparatus for localizing a construction element inside a wall as exemplarily explained on the basis of the preceding figures.

In the first step S10 an untrained machine-learning model is read in. The machine-learning model is for example an artificial neural network. Training the artificial neural network comprises adjusting the weights of the artificial neurons such that the artificial neural network represents training data depending on certain input data.

In the next step S11 training data are read in, wherein the training data comprise positional data and types of a variety of components on multiple walls and positional information about construction elements inside these walls, wherein the components are related to the construction elements.

In the next step S12 the machine-learning model is trained by means of the training data, wherein the machine-learning model is configured to represent the positional information of the construction elements depending on the positional data and types of the related components and to output a likelihood value of a presence of a construction element inside an area of a wall.

Preferably, the machine-learning model can be trained depending on at least a standard specification as a boundary condition. The standard specification specifies a standardized position of a construction element inside said wall; hence, a probable location can be easier determined. In addition, or alternatively, the machine-learning model can be trained depending on position measurements of a construction element inside the wall to be examined.

In the next step S13 the trained machine-learning model is provided. Then, the trained machine-learning model can be applied to images of a room to determine probable locations of hidden construction elements inside a wall depending on position and type of components located on the wall as input data.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for localizing a construction element (CE) inside a wall (W), the method comprising the steps:
- receiving (S1) images (IM) of a wall to be examined,
- detecting (S2) a position and a type of at least one component (C) located on the wall (W) by means of the images, wherein the component relates to a construction element (CE) inside the wall,
- outputting (S3) the position (P) on the wall and the type (T) of the component,
- reading (S4) in a trained machine-learning model, wherein the machine-learning model was trained to represent a positional information of a construction element depending on positional data and types of components on the wall and to output a likelihood value (LV_WE) of a presence of a construction element inside an area (WE) of a wall,
- generating (S5) likelihood values of a presence of a construction element inside each area of the wall by applying the trained machine-learning model to the position and the type of the component,
and
- outputting (S6) the likelihood values (LV_WE) for each area of the wall.

2. Computer-implemented method according to claim 1, wherein the components related to construction elements inside the wall are detected by means of an image classification model (ICM).

3. Computer-implemented method according to one of the preceding claims, wherein a heatmap (HM) is generated based on the likelihood values.

4. Computer-implemented method according to claim 3, wherein the heatmap (HM) is visualized as an overlay image on the wall.

5. Computer-implemented method according to one of the preceding claims, wherein a component is a port, a faucet, a power outlet, an installed electrical device, or a switch.

6. Computer-implemented method according to one of the preceding claims, wherein a computer-aided three-dimensional representation of the wall comprising the position and type of the component is generated and the three-dimensional representation of the wall is used as input for the trained machine-learning model.

7. Computer-implemented method according to one of the preceding claims, wherein the machine-learning model was trained depending on at least a standard specification as a boundary condition, wherein the standard specification specifies a standardized position of a construction element inside said wall.

8. Computer-implemented method according to one of the preceding claims, wherein the machine-learning model was trained depending on position measurements of a construction element inside the wall to be examined.

9. Computer-implemented method according to one of the preceding claims, wherein a probability value is checked against a measured position of a construction element inside the wall and a check result is output.

10. Apparatus (100) for localizing a construction element (CE) inside a wall (W), the apparatus comprising:
- a first interface (101) configured to receive images of a wall to be examined,
- a detection module (102) configured
- to detect a position and a type of at least one component (C) located on the wall by means of the images, wherein the component relates to a construction element inside the wall,
- and to output the position on the wall and the type of the component,
- a second interface (103) configured to read in a trained machine-learning model (ML), wherein the machine-learning model was trained to represent a positional information of a construction element depending on positional data and types of components on the wall and to output a likelihood value of a presence of a construction element inside an area of a wall,
- a generator (104) configured to generate likelihood values for each wall area of the wall by applying the trained machine-learning model to the position and the type of the component,
and
- an output module (105) configured to output the likelihood values for each wall element of the wall.

11. Apparatus (100) according to claim 9 further comprising at least one camera (106) configured to provide images of the wall to be examined.

12. Apparatus (100) according to claim 9 or 10 further comprising a visualization module (107) configured to visualize a heatmap (HM) based on the likelihood values.

13. Computer-implemented method for providing a trained machine-learning model for use in the method or by the apparatus according to one of the preceding claims, the method comprising:
- reading in (S10) an untrained machine-learning model,
- reading in (S11) training data, wherein the training data comprise positional data and types of a variety of components on multiple walls and positional information about construction elements inside these walls, wherein the components are related to the construction elements,
- training (S12) the machine-learning model by means of the training data, wherein the machine-learning model is configured to represent the positional information of the construction elements depending on the positional data and types of the related components and to output a likelihood value of a presence of a construction element inside an area of a wall,
and
- providing (S13) the trained machine-learning model.

14. Computer program product directly loadable into the internal memory of a digital computer, comprising software code portions for performing the method steps according to at least one of the claims 1 to 9 and 13 when said computer program product is run on a computer.
